# EUROPEAN PATENT APPLICATION

(11) **EP 4 759 695 A1**
(43) Date of publication of application: **17.06.2026**
(21) Application number: 25220355.9
(22) Date of filing: 03.12.2025
(51) Int. Cl.: B62K 21/12, B62K 21/16, B62K 21/24

(54) **BICYCLE STEM ASSEMBLY**

(30) Priority: 11.12.2024 TW 113213651 U
(71) Applicant: J.D Components Co., Ltd., Shou Shui Hsiang, Chang Hua Hsien 504 (TW)
(72) Inventor: FENG, PIN-CHIEH, CHANG HUA HSIEN (TW); CHEN, CHUN-HO, CHANG HUA HSIEN (TW)
(74) Representative: Straus, Alexander

(57) **Abstract**

A bicycle stem assembly (10) includes a handlebar mount (20), a connecting base (30), and a locking component (40). The handlebar mount (20) has a first fitting hole (21), a clamping portion (22), and a pivot portion (23) formed between the first fitting hole (21) and the clamping portion (22). The connecting base (30) is disposed at the pivot portion (23) of the handlebar mount (20) and allows the handlebar mount (20) to rotate relative to thereto. The locking component (40) includes a main operating handle (41) disposed at the clamping portion (22) of the handlebar mount (20), an auxiliary operating handle (42) pivotally mounted on the main operating handle (41), and a locking member (43) connected the main operating handle (41). When the auxiliary operating handle (42) is released from abutment with the locking member (43), the main operating handle (41) is rotatable relative to the locking member (43). Accordingly, a handlebar (50) can be converted from a use state to a storage state by rotation of the handlebar mount (20).

## Description

### BACKGROUND OF THE INVENTION

### 1. Field of the Invention

The present invention relates to bicycles and more particularly, to a bicycle stem assembly that allows a handlebar to be folded when not in use so as to avoid occupying excessive space and thereby facilitate storage.

### 2. Description of the Related Art

Bicycles, as a means of transportation, provide both environmental benefits and exercise effects, and therefore have become increasingly popular. In urban areas, public bicycles are provided for short-distance commuting, and many people also ride bicycles as a leisure activity on holidays.

A bicycle is assembled from multiple components. Among them, the stem-commonly referred to as the "handlebar stem"-serves mainly as the connecting element between the handlebar and the steerer tube. The stem may also be provided in different angle specifications so that the handlebar can be positioned higher or lower relative to the horizontal position of the stem, thereby accommodating different riding postures. In normal use, the handlebar and the bicycle frame are perpendicular to each other, and the width of the handlebar represents the overall width of the bicycle. Therefore, when storing the bicycle, the handlebar occupies a certain amount of space, making storage inconvenient.

To address storage needs, the structure between the handlebar and the steerer tube must be designed to allow relative rotation. TW M404815 discloses a quick-release steering device for a bicycle stem, which includes a stem, a support seat, a pivot pin, a pull tab, and a positioning mechanism. The two ends of the pull tab are connected to the two ends of the pivot pin. By pressing a positioning buckle to release the fixed state of the pull tab and then pulling the pull tab to pivot the pivot pin within a pivot hole, the support seat can rotate relative to the stem. Another example, TW M570265, also discloses a quick-release steering device for a bicycle stem. Its structure for fixing an operating lever is a locking mechanism disposed on the surface of the support seat and abutting the operating lever so that the operating lever cannot drive the latch member to rotate relative to the support seat. The user must first disengage the locking mechanism before being able to rotate the operating lever, thereby allowing the support seat to rotate relative to the stem.

However, from the above prior arts, it can be seen that, in order to prevent the stem (support seat) from rotating unintentionally, safety mechanisms for fixing the pull tab or operating lever are provided, and these safety mechanisms are all designed on the stem. This directly alters the structure of the stem and reduces its structural strength. Since the safety mechanism occupies the internal space of the stem, the bicycle must adopt a stem of larger volume and heavier weight. Accordingly, how to provide a stem that can drive the handlebar to rotate without compromising the structural integrity of the stem is the direction contemplated by the inventor.

### SUMMARY OF THE INVENTION

It is a primary objective of the present invention to provide a bicycle stem assembly, which enables a handlebar to be driven into a folded state.

To attain the above objective, the bicycle stem assembly comprises a handlebar mount, a connecting base, and a locking component. The handlebar mount has a first fitting hole formed at one end of the handlebar mount, a clamping portion formed at another end of the handlebar mount, and a pivot portion formed between the first fitting hole and the clamping portion. The connecting base is disposed at the pivot portion of the handlebar mount and allows the handlebar mount to rotate relative thereto. In addition, the connecting base has a second fitting hole. The locking component has a main operating handle disposed at the clamping portion of the handlebar mount, an auxiliary operating handle pivotally disposed on the main operating handle, and a locking member connected to the main operating handle, wherein the auxiliary operating handle is configured to abut against the locking member to restrict movement of the locking member. When the auxiliary operating handle is released from abutment with the locking member, the main operating handle is rotatable relative to the locking member for controlling a clamping force applied by the clamping portion of the handlebar mount.

It can be seen from the above that a handlebar is inserted through the first fitting hole of the handlebar mount, and a steerer tube is inserted through the second fitting hole of the connecting base. Since the handlebar mount is connected to the connecting base through the pivot portion, when the handlebar mount is pivoted relative to the connecting base, the handlebar can be pivoted together therewith, allowing the handlebar to be changed from a state perpendicular to a bicycle frame to a state parallel to the bicycle frame, thereby reducing the overall width of a bicycle and facilitating storage in narrow spaces. Furthermore, the auxiliary operating handle is provided on the main operating handle as a safety mechanism. By the auxiliary operating handle abutting against the locking member to prevent the locking member from being actuated, the handlebar mount is prevented from rotating relative to the connecting base, thereby avoiding accidents during riding.

Preferably, the handlebar mount further comprises a handlebar holder and an end cap detachably locked to the handlebar holder to jointly form the first fitting hole. Accordingly, through the engagement between the end cap and the handlebar holder, the handlebar can be conveniently mounted to the handlebar mount, and a function of allowing the handlebar to be replaceable is provided.

Preferably, the connecting base extends through a pivot hole of the pivot portion of the handlebar mount and is clamped by the pivot portion of the handlebar mount. Accordingly, the handlebar mount is fitted to the connecting base through the pivot hole, so that the handlebar mount can be rotated relative to the connecting base to fold the handlebar.

Preferably, the connecting base is a hollow tubular structure in which the second fitting hole is formed, and an outer surface of a bottom end of the connecting base further forms a tightening portion that is abutted against a bottom end of the pivot portion of the handlebar mount. Accordingly, the connecting base is securely fastened to the steerer tube through the clamping portion, thereby allowing the connecting base to serve as a connecting component between the handlebar mount and the steerer tube.

Preferably, a positioning component is disposed at the pivot portion of the mount, and a top end of the connecting base further forms a positioning portion assembled to the positioning component. Accordingly, when the handlebar mount is pivoted relative to the connecting base, the combination between the positioning component and the positioning portion provides an accurate position during rotation, thereby enabling the handlebar mount to be fixed at the desired position.

Preferably, the positioning component comprises a positioning plate, a positioning steel ball, and a positioning spring, and a second fastener. The pivot portion of the handlebar mount forms a through hole for accommodating the positioning steel ball, the positioning spring, and the second fastener. The positioning plate forms a plurality of positioning holes, and the positioning steel ball is engageable with different ones of the positioning holes according to a rotational position of the handlebar mount relative to the connecting base. Accordingly, when the handlebar mount is pivoted, the positioning steel ball is moved along the surface of the positioning plate. When the positioning steel ball reaches one of the positioning holes, the positioning spring pushes the positioning steel ball into the respective positioning hole, thereby precisely defining the position at which the handlebar mount can be fixed.

Preferably, the positioning plate is fixed to the positioning portion of the connecting base through a first fastener. Accordingly, when the handlebar mount is pivoted, the positioning plate is not driven to move. Instead, only the component disposed in the through hole is driven to move, causing the positioning steel ball to be moved along an arcuate rotational path on the surface of the positioning plate.

Preferably, the locking member comprises a shaft, a clamping member, a pivot pin, and a clamping plate. One end of the shaft is connected to the clamping member, and another end of the shaft extends through the clamping plate and is fixed to the main operating handle by the pivot pin. The clamping plate is abutted against the main operating handle. Accordingly, the main operating handle is operably linked with the pivot pin. When the main operating handle is pivoted, the displacement between the pivot pin and the clamping member changes the clamping force applied by the clamping portion, thereby achieving a locking or unlocking effect.

Preferably, the shaft further forms a limiting portion configured to be abutted against a stopping end of the auxiliary operating handle, and the locking component further comprises a return spring disposed on the main operating handle and abutted against an actuating end of the auxiliary operating handle. Accordingly, the return spring causes the auxiliary operating handle to automatically abut against the limiting portion of the shaft to prevent the shaft from being actuated. A user must press the auxiliary operating handle against the return spring in order to allow the shaft to be in a freely operable state, so that the main operating handle can drive the shaft to operate.

Preferably, the clamping portion of the handlebar mount comprises two lugs defining a gap therebetween. The shaft extends through the two lugs and is connected to the clamping member, such that when the main operating handle is rotated relative to the locking member, a distance of the gap is controlled. Accordingly, by changing the distance of the gap, the clamping force applied by the clamping portion is correspondingly changed, and the force with which the pivot portion secures the connecting base is also changed, thereby allowing the handlebar mount to be in either a fixed-to-connecting-base state or a non-fixed state.

Preferably, a top surface of the handlebar mount further forms a mounting portion that is a flat surface and covers the pivot portion. Accordingly, the top surface of the handlebar mount is designed to be flat and serves as the mounting portion for installing other bicycle accessories, and the pivot portion does not affect the installable position of such accessories.

### BRIEF DESCRIPTION OF THE DRAWINGS

FIG. 1 is a perspective view of the present invention, showing a state in which it is used in conjunction with a handlebar and a steerer tube;
FIG. 2 is an exploded view of the present invention;
FIG. 3 is a perspective view of the present invention, showing a state in which the auxiliary operating handle is not abutted against the locking member;
FIG. 4 is a view similar to FIG. 3, showing a state in which the main operating handle is omitted;
FIG. 5 is a perspective view of the present invention, showing a state in which the main operating handle is rotated;
FIG. 6 is a perspective view of the present invention, showing a state in which the handlebar mount is rotated relative to the connecting base; and
FIG. 7 is a sectional view of the present invention, showing the position of the positioning component.

### DETAILED DESCRIPTION OF THE INVENTION

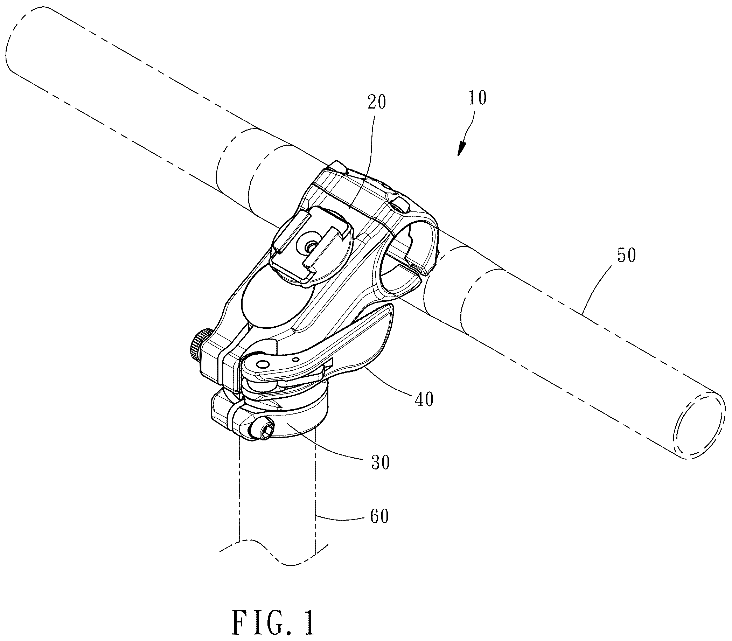

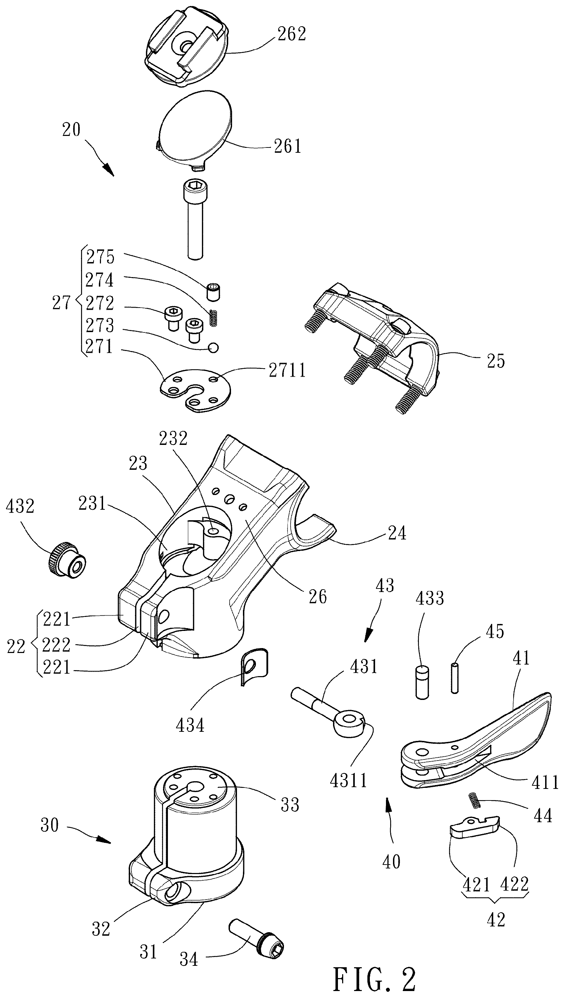

Please refer to FIGS. 1 and 2, a bicycle stem assembly 10 of the present invention comprises a handlebar mount 20, a connecting base 30, and a locking component 40.

The handlebar mount 20 includes a handlebar holder 24 an end cap 25. The end cap 25 is fastened to one end of the handlebar holder 24, so that the handlebar holder 24 and the end cap 25 jointly form a first fitting hole 21. The first fitting hole 21 is used for a handlebar 50 to be inserted therethrough. Another end of the handlebar holder 24 forms a clamping portion 22. The clamping portion 22 has two lugs 221 with a gap 222 defined between the two lugs 221. A pivot portion 23 is formed between the first fitting hole 21 and the clamping portion 22, which is a tubular body extending downward from the handlebar holder 24 and having a pivot hole 231. Furthermore, a mounting portion 26 is formed on the top surface of the handlebar holder 24. The mounting portion 26 is a planar surface covering the pivot portion 23. The pivot hole 231 of the pivot portion 23 can be covered by a cover plate 261, so that the mounting portion 26 presents a flat surface, thereby allowing a bicycle accessory 262 to be mounted on the mounting portion 26.

The handlebar mount 20 further includes a positioning component 27. The positioning component 27 includes a positioning plate 271, two first fasteners 272, a positioning steel ball 273, a positioning spring 274, and a second fastener 275. The positioning plate 271 has a plurality of positioning holes 2711. The positioning steel ball 273, the positioning spring 274, and the second fastener 275 are received in a through hole 232 of the pivot portion 23 of the handlebar holder 24, and the second fastener 275 is fixed in the through hole 232. One end of the second fastener 275 is abutted against one end of the positioning spring 274, and the other end of the positioning spring 274 is abutted against the positioning steel ball 273. The second fastener 275 serves to restrict the positions of the positioning spring 274 and the positioning steel ball 273 within the through hole 232. By the elastic force of the positioning spring 274, the positioning steel ball 273 is pushed outward to engage one of the positioning holes 2711 of the positioning plate 271.

The connecting base 30 is a hollow tubular structure, including a second fitting hole 31, a clamping portion 32, and a positioning portion 33. The clamping portion 32 is formed on the outer surface at the bottom end of the connecting base 30, and the positioning portion 33 is formed on the top surface of the connecting base 30. The connecting base 30 is sleeved over a steerer tube 60 through the second fitting hole 31, and a screw 34 is tightened into the clamping portion 32 to cause the connecting base 30 to clamp and secure the steerer tube 60. In addition, the connecting base 30 is also inserted through the pivot hole 231 of the pivot portion 23 of the handlebar mount 20. The positioning plate 271 is fixed to the positioning portion 33 of the connecting base 30 through the two first fasteners 272. At this time, the clamping portion 32 of the connecting base 30 is abutted against the bottom end of the pivot portion 23 of the handlebar mount 20, such that the handlebar mount 20 can be rotated relative to the connecting base 30.

The locking component 40 includes a main operating handle 41, an auxiliary operating handle 42, a locking member 43, and a return spring 44. A receiving slot 411 is formed on a side of the main operating handle 41, and the auxiliary operating handle 42 is disposed in the receiving slot 411. The auxiliary operating handle 42 is pivotally connected to the main operating handle 41 through a pivot member 45, and the pivot member 45 is located between a stopping end 421 and an actuating end 422 of the auxiliary operating handle 42.

The locking member 43 includes a shaft 431, a clamping member 432, a pivot pin 433, and a clamping plate 434. The shaft 431 is inserted through the two lugs 221 of the clamping portion 22 of the handlebar mount 20. One end of the shaft 431 is connected to the clamping member 432, and the other end of the shaft 431 passes through the clamping plate 434 and extends into the receiving slot 411 of the main operating handle 41. The pivot pin 433 then passes through the main operating handle 41 and the shaft 431 and is retained in the main operating handle 41. One surface of the clamping plate 434 is abutted against the outer surface of one of the lugs 221, and the opposite surface of the clamping plate 434 is abutted against a cam portion of the main operating handle 41. In this manner, the main operating handle 41 is in close contact with the clamping plate 434 and rotated about the center of the pivot pin 433. Through the cam portion of the main operating handle 41, rotation of the main operating handle 41 causes the shaft 431 and the clamping member 432 to be displaced, thereby changing the clamping force applied by the clamping portion 22 of the handlebar mount 20.

A limiting portion 4311 is further formed at one end of the shaft 431 that is connected to the pivot pin 433. The return spring 44 is disposed in the receiving slot 411 of the main operating handle 41, with one end fixed to the main operating handle 41 and the other end abutting against the actuating end 422 of the auxiliary operating handle 42. The return spring 44 pushes the actuating end 422 of the auxiliary operating handle 42, causing the auxiliary operating handle 42 to be pivoted about the pivot member 45, such that the stopping end 421 is abutted against the limiting portion 4311 of the pivot shaft 431.

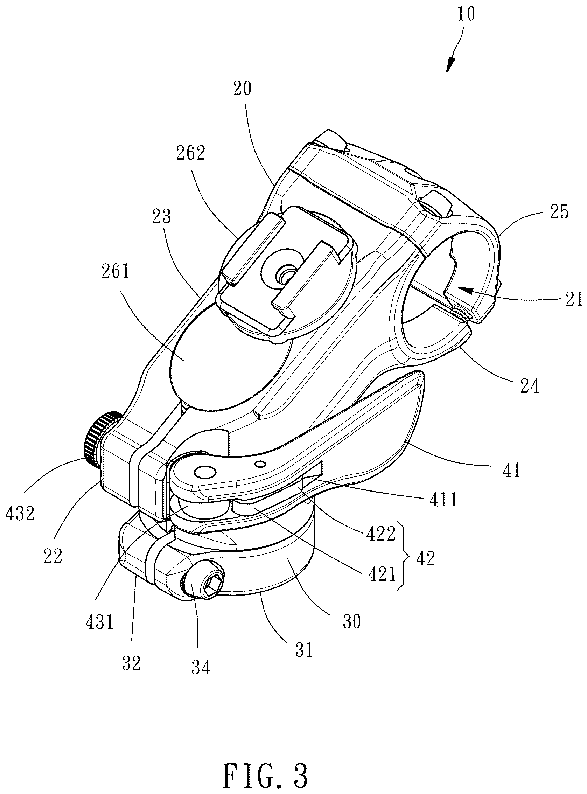

The following describes the transition of the handlebar 50 from a use state to a storage state. Please refer to FIGS. 3 to 7 in conjunction with the description below.

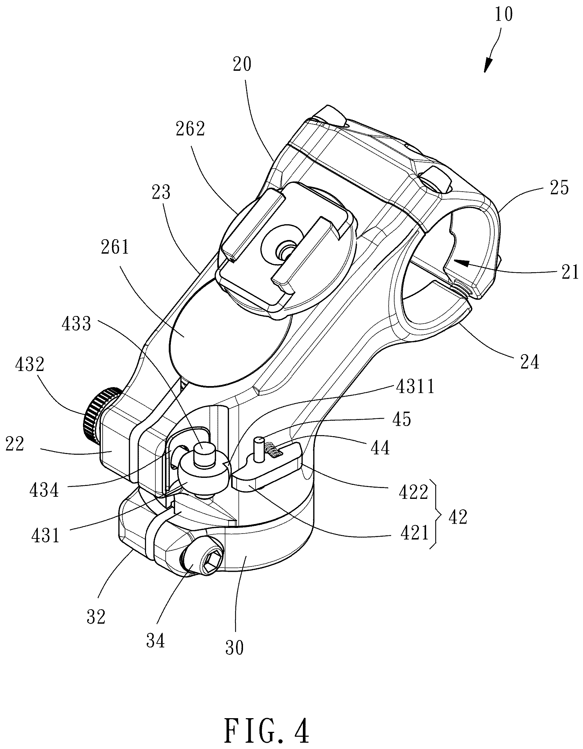

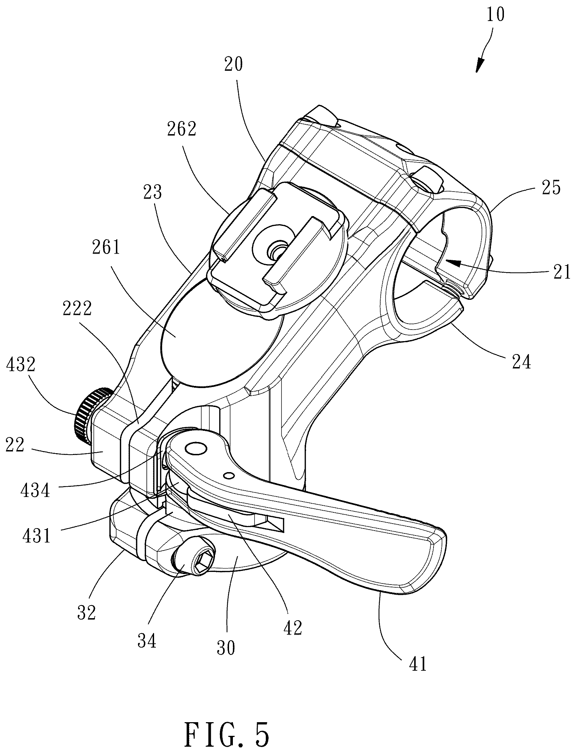

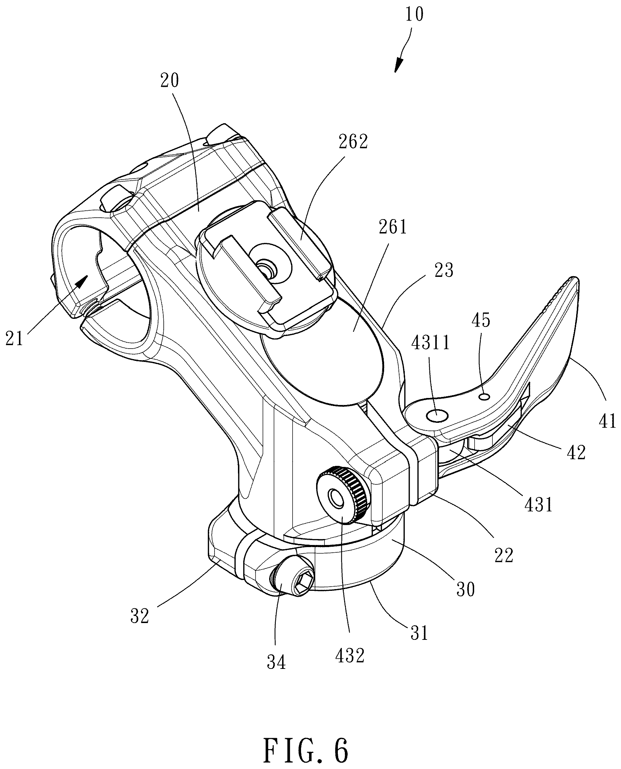

First, in the use state, as shown in FIGS. 3 and 4, the stopping end 421 of the auxiliary operating handle 42 is abutted against the limiting portion 4311 of the shaft 431, so that the main operating handle 41 cannot be operated, thereby keeping the handlebar mount 20 fixed to the connecting base 30 and preventing the handlebar 50 from unintentionally rotating during riding and causing danger. Accordingly, the user must apply force to the actuating end 422 of the auxiliary operating handle 42 to overcome the elastic force of the return spring 44, allowing the stopping end 421 of the auxiliary operating handle 42 to be separated from the limiting portion 4311 of the shaft 431 and thereby releasing the abutting relationship between the auxiliary operating handle 42 and the locking member 43. At this time, the shaft 431 becomes freely operable. Subsequently, the user pulls the main operating handle 41 outward, causing the main operating handle 41 to rotate while remaining in close contact with the surface of the clamping plate 434. As the rotation angle increases, the shaft 431 and the clamping member 432 are displaced, and the gap 222 of the clamping portion 22 of the handlebar mount 20 increases accordingly, as shown in FIG. 5. This reduces the clamping force applied by the clamping portion 22 on the connecting base 30, thus releasing the assembled relationship between the handlebar mount 20 and the connecting base 30. The handlebar mount 20 can then be rotated relative to the connecting base 30, allowing the handlebar 50 to change from a state perpendicular to the bicycle frame to a state parallel to the bicycle frame, as shown in FIG. 6.

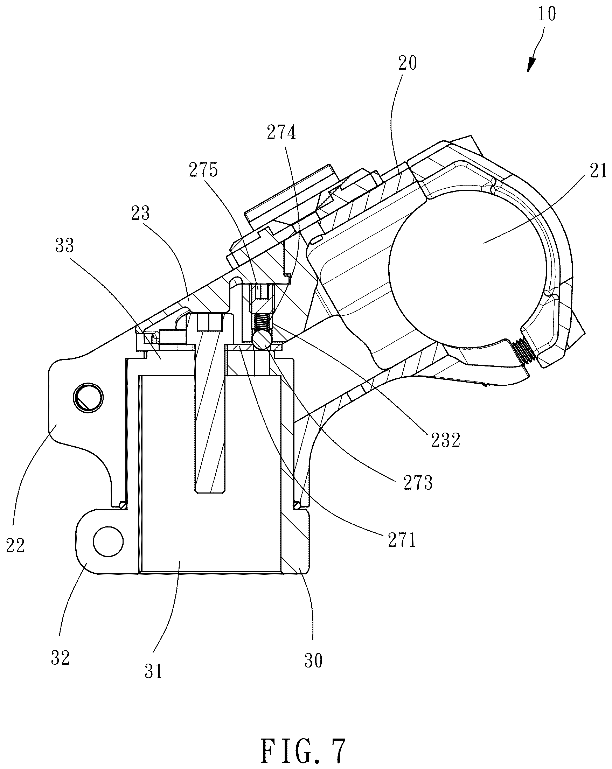

When the handlebar mount 20 is rotated, the rotational force acts against the positioning spring 274, causing the positioning steel ball 273 to be pushed out of the positioning hole 2711 of the positioning plate 271. The positioning steel ball 273 then moves along the surface of the positioning plate 271, which is disposed on the connecting base 30, until it reaches another positioning hole 2711. The positioning steel ball 273 then drops into the respective positioning hole 2711 to engage the positioning plate 271. This indicates that when the handlebar mount 20 has rotated by 90°, the user will hear the sound of the positioning steel ball 273 falling into the respective positioning hole 2711, confirming that the handlebar mount 20 has reached the target rotational position, as shown in FIG. 7. At this time, the user may again press the auxiliary operating handle 42 and push the main operating handle 41 inward. By driving the shaft 431 and the clamping member 432, the gap 222 is reduced, thereby increasing the clamping force applied by the clamping portion 22 on the connecting base 30 so as to fix the handlebar mount 20 onto the connecting base 30 and prevent the handlebar mount 20 from rotating arbitrarily.

In summary, the bicycle stem assembly 10 of the present invention uses the handlebar mount 20 to secure the handlebar 50 and uses the connecting base 30 to secure the steerer tube 60. Through the feature that the handlebar mount 20 is rotatable relative to the connecting base 30, the handlebar 50 can be rotated accordingly, thereby achieving the effect of folding the handlebar 50. Furthermore, the auxiliary operating handle 42, which serves as a safety mechanism, is disposed within the main operating handle 41. The auxiliary operating handle 42 blocks the locking member 43 from being actuated, preventing the main operating handle 41 from loosening and causing the handlebar mount to be rotated, thereby avoiding accidents during riding. Compared to the prior art, the present invention does not configure the safety mechanism directly on the handlebar mount 20 itself, thereby avoiding damage to the structure of the handlebar mount 20 and maintaining its original structural strength, and furthermore does not require matching a stem assembly of a specific size.

## Claims

1. A bicycle stem assembly (10) **characterized in that** comprising:
a handlebar mount (20) having a first fitting hole (21) formed at one end of the handlebar mount (20), a clamping portion (22) formed at another end of the handlebar mount (20), and a pivot portion (23) formed between the first fitting hole (21) and the clamping portion (22);
a connecting base (30) disposed at the pivot portion (23) of the handlebar mount (20) and allowing the handlebar mount (20) to rotate relative thereto, the connecting base (30) having a second fitting hole (31); and
a locking component (40) having a main operating handle (41) disposed at the clamping portion (22) of the handlebar mount (20), an auxiliary operating handle (42) pivotally disposed on the main operating handle (41), and a locking member (43) connected to the main operating handle (41), wherein the auxiliary operating handle (42) is configured to abut against the locking member (43) to restrict movement of the locking member (43), and when the auxiliary operating handle (42) is released from abutment with the locking member (43), the main operating handle (41) is rotatable relative to the locking member (43) for controlling a clamping force applied by the clamping portion (22) of the handlebar mount (20).

2. The bicycle stem assembly (10) as claimed in claim 1, **characterized in that** the handlebar mount (20) further comprises a handlebar holder (24) and an end cap (25) detachably locked to the handlebar holder (24) to jointly form the first fitting hole (21).

3. The bicycle stem assembly (10) as claimed in claim 1 or 2, **characterized in that** the connecting base (30) extends through a pivot hole (231) of the pivot portion (23) of the handlebar mount (20) and is clamped by the pivot portion (23) of the handlebar mount (20).

4. The bicycle stem assembly (10) as claimed in claim 3, **characterized in that** the connecting base (30) is a hollow tubular structure in which the second fitting hole (31) is formed, and an outer surface of a bottom end of the connecting base (30) further forms a tightening portion (32) abutted against a bottom end of the pivot portion (23) of the handlebar mount (20).

5. The bicycle stem assembly (10) as claimed in any one of claims 1 to 4, **characterized in that** a positioning component (27) is disposed at the pivot portion (23) of the handlebar mount (20), and a top end of the connecting base (30) further forms a positioning portion (33) assembled to the positioning component (27).

6. The bicycle stem assembly (10) as claimed in claim 5, **characterized in that** the positioning component (27) comprises a positioning plate (271), a positioning steel ball (273), and a positioning spring (274), and a second fastener (275); the pivot portion (23) of the handlebar mount (20) forms a through hole (232) for accommodating the positioning steel ball (273), the positioning spring (274), and the second fastener (275); the positioning plate (271) forms a plurality of positioning holes (2711), and the positioning steel ball (273) is engageable with different ones of the positioning holes (2711) according to a rotational position of the handlebar mount (20) relative to the connecting base (30).

7. The bicycle stem assembly (10) as claimed in claim 6, **characterized in that** the positioning plate (271) is fixed to the positioning portion (33) of the connecting base (30) through a first fastener (272).

8. The bicycle stem assembly (10) as claimed in any one of claims 1 to 7, **characterized in that** the locking member (43) comprises a shaft (431), a clamping member (432), a pivot pin (433), and a clamping plate (434); one end of the shaft (431) is connected to the clamping member (432), and another end of the shaft (431) extends through the clamping plate (434) and is fixed to the main operating handle (41) by the pivot pin (433), and the clamping plate (434) is abutted against the main operating handle (41).

9. The bicycle stem assembly (10) as claimed in claim 8, **characterized in that** the shaft (431) further forms a limiting portion (4311) configured to be abutted against a stopping end (421) of the auxiliary operating handle (42), and the locking component (43) further comprises a return spring (44) disposed on the main operating handle (41) and abutted against an actuating end (422) of the auxiliary operating handle (42).

10. The bicycle stem assembly (10) as claimed in claim 8, **characterized in that** the clamping portion (22) of the handlebar mount (20) comprises two lugs (221) defining a gap (222) therebetween; the shaft (431) extends through the two lugs (221) and is connected to the clamping member (432), such that when the main operating handle (41) is rotated relative to the locking member (43), a distance of the gap (222) is controlled.

11. The bicycle stem assembly (10) as claimed in in any one of claims 1 to 10, **characterized in that** a top surface of the handlebar mount (20) further forms a mounting portion (26) that is a flat surface and covers the pivot portion (23).
